# EUROPEAN PATENT APPLICATION

(11) **EP 4 674 378 A1**
(43) Date of publication of application: **07.01.2026**
(21) Application number: 24791271.0
(22) Date of filing: 04.07.2024
(51) Int. Cl.: A61C 17/36

(54) **HOUSING FOR ORAL CLEANING AND ORAL CLEANING APPARATUS**

(30) Priority: 13.05.2024 CN 202410594637
(71) Applicant: Shenzhen Soocas Technology Co., Ltd., Shenzhen, Guangdong 518000 (CN)
(72) Inventor: GAN, Wenxu, Shenzhen, Guangdong 518000 (CN); LI, Zhoujian, Shenzhen, Guangdong 518000 (CN); ZHANG, Yuanping, Shenzhen, Guangdong 518000 (CN)
(74) Representative: Herrero & Asociados, S.L.
(86) International application number: PCT/CN2024/103696
(87) International publication number: WO 2025/236379

(57) **Abstract**

Embodiments of the present disclosure provide a casing for oral cleaning and an oral cleaning apparatus. The casing includes a casing and a cover body, where the casing body has an opening, and the cover body covers the opening of the casing body. The cover body and the casing body are nested within each other along a preset direction, and the cover body and the casing body form a liquid storage cavity. A microchannel is formed between the casing body and the cover body, where the microchannel allows a gas to pass through along the preset direction and obstructs a liquid from flowing out, and the microchannel communicates the liquid storage cavity with outside world by means of a fit-up gap between the casing body and the cover body. The casing for oral cleaning and the oral cleaning apparatus provided in the embodiments of the present disclosure are non-porous in appearance, and breathable and waterproof.

## Description

The present disclosure claims priority to Chinese Patent Application No. 202410594637.1 titled "CASING FOR ORAL CLEANING AND ORAL CLEANING APPARATUS" and filed to the State Patent Intellectual Property Office on May 13, 2024, the entire contents of which are incorporated herein by reference.

### TECHNICAL FIELD

Embodiments of the present disclosure relate to the field of oral cleaning appliance technology, and more particularly, to a casing for oral cleaning and an oral cleaning apparatus.

### BACKGROUND

As people pay more attention to oral care, electric toothbrushes and oral irrigators have gradually become common household oral care tools. By means of highfrequency vibration of toothbrush heads driven by motors, the electric toothbrushes can break toothpastes into fine foam in an instant and clean slits between teeth thoroughly. Water pumps can pump out high-speed water columns with a certain pressure, so the oral irrigators can clean the teeth and the slits between teeth by means of impact force of the high-speed water columns.

Related oral cleaners may include bodies, cleaning accessories, motors, water pumps, and water tanks. The cleaning accessories are arranged at heads of the bodies, and the motors, the water pumps and the water tanks are arranged inside the bodies. Output shafts of the motors have flow channels through which water flows, and the flow channels are communicated with the water tanks. The cleaning accessories have cavities and outlets communicated with the cavities, the output shafts of the motors pass through the cavities, and the flow channels of the output shafts of the motors are communicated with the outlets, such that liquids in the water tanks can be sprayed out of the outlets through the flow channels under the action of the water pumps.

The bodies of the related oral cleaners are provided with air vents, such that airflows can enter the water tanks through the air vents when the water pumps are operating. However, these air vents are sometimes designed on exterior surfaces of the bodies, so there is a risk of blocking these air vents when use hold the bodies, which adversely affects proper functioning of the water pumps.

### SUMMARY

An objective of the present disclosure is to provide a casing for oral cleaning and an oral cleaning apparatus. While taking into account appearance design, design of hidden air vents may be implemented by means of microstructures of sealed cover bodies, which can solve the problem that proper functioning of water pumps may be adversely affected because exposed air vents may be blocked by users when they hold the bodies, without additional design costs for additional internal air vent pipelines.

To achieve the above objective, one aspect of embodiments of the present disclosure provides a casing for oral cleaning, which includes a casing and a cover body, where the casing body has an opening, and the cover body covers the opening of the casing body. The cover body and the casing body are nested within each other along a preset direction, and the cover body and the casing body form a liquid storage cavity. A microchannel is formed between the casing body and the cover body, where the microchannel allows a gas to pass through along the preset direction and obstructs a liquid from flowing out, and the microchannel communicates the liquid storage cavity with outside world by means of a fit-up gap between the casing body and the cover body.

Alternatively, a sealing groove is provided on a sidewall of one of the casing body and the cover body, where the sealing groove has an opening facing toward an outer side. A sealing cavity is formed by enclosing a sidewall of other one of the casing body and the cover body with the sealing groove, and the sealing cavity communicates the liquid storage cavity with the outside world by means of the fit-up gap, where an airflow groove is provided on a groove bottom wall of the sealing groove, and the airflow groove is provided with an opening facing toward the sealing cavity. The casing also includes a sealing element, where the sealing element is clamped between an inner sidewall of the other one of the casing body and the cover body and a groove bottom wall of the sealing groove, and the microchannel is formed between a surface of the sealing element close to the airflow groove and the airflow groove.

Alternatively, in the preset direction, a liquid level difference h formed between a highest liquid level height of the liquid storage cavity and a height of a horizontal plane of the airflow groove meets 0<p*g*h≤30%*Po, where ρ represents air density, g represents liquid density, and Po represents one bar atmospheric pressure.

Alternatively, the height difference h meets 0<ρ*g*h≤20%*Po.

Alternatively, the height difference h meets 0<p*g*h<10%*Po.

Alternatively, a depth of the airflow groove ranges from 0.1 mm to 0.4 mm.

Alternatively, the depth of the airflow groove ranges from 0.25 mm to 0.35 mm.

Alternatively, the sealing groove has a groove bottom wall and two groove sidewalls, and the two groove sidewalls are connected onto two sides of the groove bottom wall along the preset direction. In the preset direction, a height of the sealing element is less than that of the groove bottom wall.

Alternatively, the airflow groove runs through the groove bottom wall along the preset direction.

Alternatively, the sealing groove has a groove bottom wall and two groove sidewalls, where the two groove sidewalls are connected onto two sides of the groove bottom wall along an extension direction of the sidewall of the cover body. A flow guide groove is provided on each of the two inner sidewalls, where the flow guide groove has an opening facing toward the sealing cavity, and a passage allowing a gas to flow through is formed between the flow guide groove and the sealing element, and the passage is communicated with the microchannel. The gas entering the sealing cavity flows around the sealing element for at least half circle through the passage and the microchannel, and then flows out of the sealing cavity.

Alternatively, the flow guide groove runs through the groove sidewall along a direction perpendicular to the groove bottom wall.

Alternatively, a circumferential length of the airflow groove is shorter than a circumferential length of the sealing groove.

Another aspect of the embodiments of the present disclosure provides an oral cleaner, which includes a pump mechanism, a cleaning accessory, and the casing for oral cleaning. The pump mechanism is arranged in an inner cavity of the casing, the cleaning accessory has a cavity and an outlet communicated with each other, where the cavity of the cleaning accessory is communicated with a liquid outlet end of the pump mechanism, the pump mechanism pumps a liquid from the liquid storage cavity into the cavity of the cleaning accessory, and the liquid flows out of the outlet.

Alternatively, the cleaning accessory also includes a brush.

In the casing for oral cleaning and the oral cleaning apparatus provided in the embodiments of the present disclosure, the cover body is inserted into the casing body through the opening of the casing body, and the opening of the casing body is closed, where the cover body and the casing body higher than the cover body form the liquid storage cavity. The microchannel is formed between an outer surface of the cover body and an inner casing wall of the casing body. The microchannel is communicated with the outside world by means of the fit-up gap between the cover body and the casing body, such that the flow channel of the gas is hidden inside the casing body to avoid blocking the flow channel of the gas, which is convenient for gas ventilation. In addition, the microchannel has a smaller aperture, which can allow the gas to flow and prevent the liquid from flowing out under the action of external atmospheric pressure and negative pressure inside the liquid storage cavity, to achieve gas ventilation and leakage prevention.

### BRIEF DESCRIPTION OF THE DRAWINGS

FIG. 1 is a schematic diagram of a related oral cleaner;
FIG. 2 is a schematic diagram of an oral cleaner according to an embodiment of the present disclosure;
FIG. 3 is a longitudinal profile view of the oral cleaner shown in FIG. 2;
FIG. 4 is a partial view of another longitudinal profile of the oral cleaner shown in FIG. 2;
FIG. 5 is an internal layout diagram of an oral cleaning apparatus according to an embodiment of the present disclosure;
FIG. 6 is an another internal layout diagram of the oral cleaning apparatus according to an embodiment of the present disclosure;
FIG. 7 is a section view of a separator shown in FIG. 4;
FIG. 8 is a partial section view of a casing at an airflow groove according to an embodiment of the present disclosure;
FIG. 9 is a partial section view of another casing at an airflow groove according to an embodiment of the present disclosure;
FIG. 10 is a partial section view of a casing at a non-airflow groove according to an embodiment of the present disclosure;
FIG. 11 is a schematic diagram of a cover body and a third sealing ring according to an embodiment of the present disclosure;
FIG. 12 is an exploded view of the oral cleaner according to an embodiment of the present disclosure;
FIG. 13 is an exploded view of a motor, a connector, a mounting member and a circuit board shown in FIG. 12;
FIG. 14 is an assembly stereogram of the mounting member, the connector and a pump mechanism shown in FIG. 13;
FIG. 15 is an exploded view of the connector, the mounting member and the motor of the oral cleaner according to an embodiment of the present disclosure;
FIG. 16 is an exploded view of the pump mechanism, the mounting member and the connector shown in FIG. 15;
FIG. 17 is a partial schematic diagram of FIG. 3; and
FIG. 18 is an exploded view of a connector according to an embodiment of the present disclosure.

Reference numerals in the accompanying drawings:
oral cleaning apparatus 1000;
casing 100; power cavity 110; liquid storage cavity 120; casing body 130; second mating surface 131; cover body 140; third sealing groove 141; third sealing cavity 142; airflow groove 143; flow guide groove 144; first mating surface 145; top end 160; bottom end 170; microchannel 180; fit-up gap 190;
motor 200; output shaft 210; first flow channel 211; motor body 220;
pump mechanism 300; liquid inlet end 310; first valve part 311; first end cover part 312; liquid outlet end 320; second valve part 321; second end cover part 322; power end 330; pump housing 331; piston 332; driving member 333;
connector 400; second flow channel 410; first flow segment 411; second flow segment 412; first arc segment 4121; second arc segment 4122; third flow channel 420; first connection part 430; reversing chamber 431; first intrados 432; second connection part 440; second intrados 441; cover plate segment 442; convex segment 443; baffle segment 444; mounting groove 450;
mounting member 500; first mounting part 510; second mounting part 520; through hole 530;
separator 600; accommodating chamber 610; accommodating hole 620; first part 630; second part 640; third part 650; fourth flow channel 651; fourth part 660; fifth part 670; intercommunicating pore 680;
energy source 710; circuit board 720;
first sealing element 810; second sealing element 820; third sealing element 830; fourth sealing element 840;
first vibration damper 911; second vibration damper 912; third vibration damper 913; fourth vibration damper 914;
first fastener 921; second fastener 922; third fastener 923;
cleaning accessory 2000; brush body 2100; cavity 2200; and outlet 2300.

### DETAILED DESCRIPTION

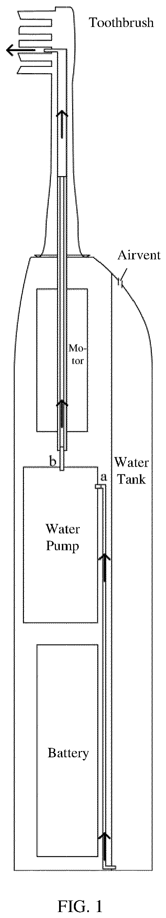

FIG. 1 is a schematic diagram of a related oral cleaner. Referring to FIG. 1, the related oral cleaner has a slender body, where a water tank is arranged on a right side of the body, and a motor, a water pump, and a battery are arranged on a left side of the body. A longitudinal length of the water tank is almost equal to that of the body, and the water tank has a smaller diameter, which may cause it difficult for a user to clean an inner wall of the water tank. In addition, the water pump is arranged in a left middle of the body, and an input end a and an output end b of the water pump are arranged on an upper part of the water pump, resulting in an overlong longitudinal distance between the input end a of the water pump and a bottom of the water tank, resulting in a longer waterway between the input end a of the water pump and the bottom of the water tank, which is not conducive to pumping a liquid in the water tank by the water pump.

In view of the above technical problems, an inventor of the present disclosure come up with an idea of arranging the water tank at a lower part of the body and arranging the motor, the water pump, and so on above the water tank, to shorten the longitudinal length of the water tank, making it easier to clean the water tank. Furthermore, a transverse width of the body can also be reduced to make it easier to grip the body by the user. However, this may reduce a volume of the water tank. To maximize the volume of the water tank, the inventor of the present disclosure attempts to shorten the longitudinal length of the water pump. Specifically, the input end and the output end of the water pump may be changed from being arranged above the water pump to being arranged on a lower lateral side of the water pump, which not only increases a longitudinal depth of the sunken water tank, but also shortens the distance between the input end of the water pump and the bottom of the water tank, and improves a pumping effect of the water pump. In addition, a reversing waterway may be arranged in space on a lateral side of the water pump, such that the output end of the water pump arranged on the lower lateral side is communicated with a flow channel of an output shaft of the motor arranged on the upper part. In this way, in the case of ensuring the appearance of the slender body, the water tank, the water pump, and the motor are reasonably distributed, which not only increases the volume of the sunken water tank, but also improves the pumping effect of the water pump.

To make the objectives, technical solutions, and advantages of the embodiments of the present disclosure clearer, the technical solutions in the embodiments of the present disclosure will be described clearly and completely below, in conjunction with the accompanying drawings in the embodiments of the present disclosure. Apparently, the described embodiments are some but not all of the embodiments of the present disclosure.

All other embodiments obtained by a person of ordinary skill in the art based on the embodiments of the present disclosure without creative efforts shall fall within the protection scope of the present disclosure. The following embodiments and features thereof may be combined with each other on a non-conflict basis.

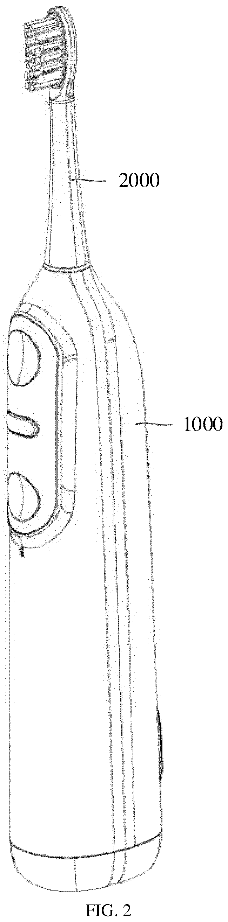

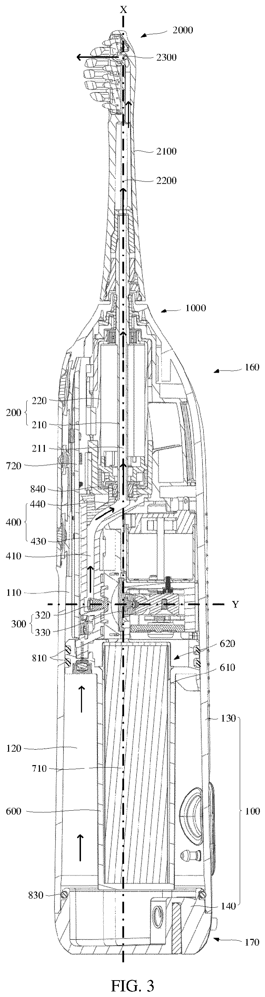

FIG. 2 is a schematic diagram of an oral cleaner according to an embodiment of the present disclosure, and FIG. 3 is a longitudinal profile view of the oral cleaner shown in FIG. 2. With reference to FIG. 2 and FIG. 3, the oral cleaner provided in the embodiments of the present disclosure may include an oral cleaning apparatus 1000 and a cleaning accessory 2000, where the cleaning accessory 2000 may be a device capable of cleaning an oral cavity, such as a toothbrush head, a washing head, or an integrated scouring head. In FIG. 3 the cleaning accessory 2000 is shown as the integrated scouring head, where the cleaning accessory 2000 may include a brush body 2100, and the brush body 2100 may have a cavity 2200 and an outlet 2300 communicated with the cavity 2200.

With continued reference to FIG. 3, the oral cleaning apparatus 1000 may include a casing 100 and a power unit. The power unit may include a power component and a connector 400. To make it easier to grip the body by the user, the casing 100 may be shaped like a slender cylinder. A cross section of the casing 100 may be circular or non-circular (such as D-shaped, oval, or polygonal). A first axis X is a center line of the casing 100. That is, a center point of each cross section of the casing 100 may be positioned on the first axis X. The casing 100 may extend along a direction of the first axis X (an up-down direction in FIG. 3), and the casing 100 may have, along the direction of the first axis X, a top end 160 and a bottom end 170 arranged opposite to each other. Interior of the casing 100 may be hollow, such that the casing 100 may have an inner cavity.

The power component may be arranged in the inner cavity of the casing 100, and the power component may include a motor 200 and a pump mechanism 300. To maintain the slender shape of the casing 100, the motor 200 and the pump mechanism 300 may be arranged in sequence along the direction of the first axis X. The motor 200 may be closer to the top end 160 (as shown in FIG. 3, the motor 200 is positioned above the pump mechanism 300) of the casing 100 than the pump mechanism 300, such that the output shaft 210 of the motor 200 can pass through the top end 160 of the casing 100 and can be connected to the cleaning accessory 2000 (an accessory having brush bristles, such as a toothbrush head or an integrated scouring head), to drive the cleaning accessory 2000 to move. The motor 200 may be a rotating motor 200 capable of rotating the cleaning accessory 2000, or the motor 200 may be a vibration motor 200 (such as an acoustic motor 200) capable of making the cleaning accessory 2000 swing at a higher frequency. The motor 200 may include a motor body 220 and an output shaft 210. An axis of the output shaft 210 and the first axis X of the casing 100 may coincide with each other or may be arranged at parallel intervals. The output shaft 210 may pass through the motor body 220 along its axial direction. The top end 160 of the axial direction of the output shaft 210 may be threaded out of the top end 160 of the motor body 220 and may be connected to the cleaning accessory 2000, to drive the cleaning accessory 2000 to move.

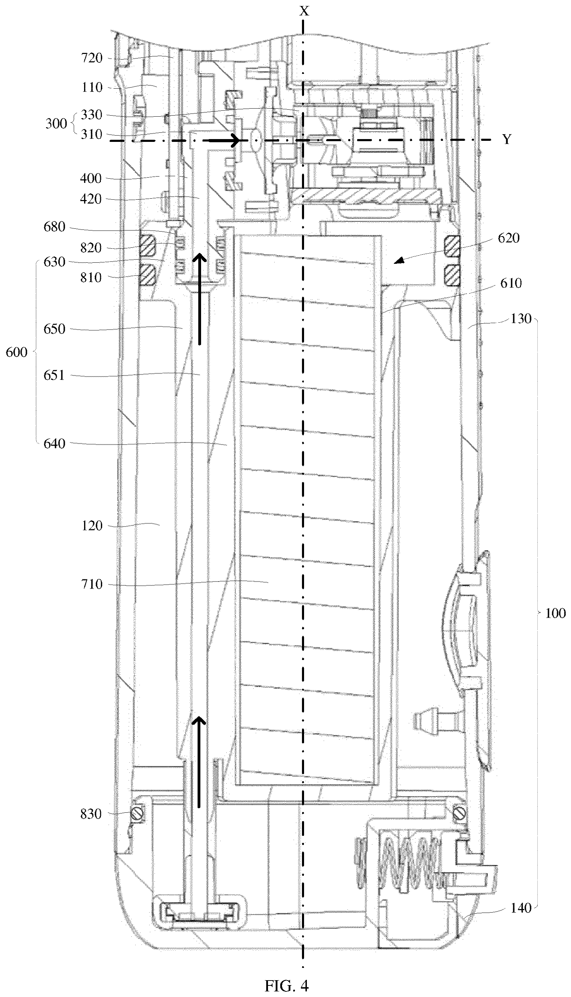

The output shaft 210 may have a first flow channel 211 that runs through the output shaft 210 along its axial direction. The inner cavity of the casing 100 may include a liquid storage cavity 120, which may be used to store a liquid. FIG. 4 is a partial view of another longitudinal profile of the oral cleaner shown in FIG. 2. Referring to FIG. 3 and FIG. 4, the connector 400 may have a second flow channel 410 and a third flow channel 420. It should be noted that the third flow channel 420 and the second flow channel 410 are not in the same longitudinal profile, so the second flow channel 410 can be seen from the profile shown in FIG. 3, and the third flow channel 420 can be seen from FIG. 4.

The third flow channel 420 can communicate the liquid storage cavity 120 with a liquid inlet end 310 of the pump mechanism 300, and the second flow channel 410 can communicate a liquid outlet end 320 of the pump mechanism 300 with the first flow channel 211. In this way, both the second flow channel 410 and the third flow channel 420 are integrated on the connector 400, which not only reduces number of parts required for assembly and improves assembly efficiency, but also improves overall structural strength of the second flow channel 410 and the third flow channel 420 to resist impact force of water flow. Further, stability of connection between the liquid storage cavity 120 and the second flow channel 410, the second flow channel 410 and the pump mechanism 300, the pump mechanism 300 and the third flow channel 420, and the third flow channel 420 and the first flow channel 211 of the output shaft 210 is improved to reduce risk of liquid leakage at the connection.

The first flow channel 211 of the output shaft 210 may be communicated with the outlet 2300 through the cavity 2200 of the cleaning accessory 2000 when the cleaning accessory 2000 is an accessory, such as a washing head or an integrated scouring head, which has the cavity 2200 and the outlet 2300 communicated with the cavity 2200 and can squirt a liquid from the outlet 2300. Arrows in FIG. 3 and FIG. 4 indicate flow directions of the liquid. Referring to the arrows in FIG. 3 and FIG. 4, when the oral cleaner realizes its rinsing function, the pump mechanism 300 can guide the liquid in the liquid storage cavity 120 to flow into a pump chamber of the pump mechanism 300 through the third flow channel 420 and the liquid inlet end 310 of the pump mechanism 300, then the liquid flows into the first flow channel 211 through the liquid outlet end 320 of the pump mechanism 300 and the second flow channel 410, and then the liquid flows out of the outlet 2300 through the cavity 2200 of the cleaning accessory 2000.

Referring to FIG. 3, the power component (the motor 200 and the pump mechanism 300) and the liquid storage cavity 120 may be arranged in sequence along the direction of the first axis X (as shown in FIG. 1, the power component is positioned above the liquid storage cavity 120), to shorten the longitudinal length of the liquid storage cavity 120 and facilitate the user to clean the water tank. Furthermore, the transverse width of the casing 100 can also be reduced, to make it easier to grip by the user. The pump mechanism 300 is closer to the liquid storage cavity 120 than the motor 200, to make it easier for the pump mechanism 300 to pump the liquid from the liquid storage cavity 120.

To increase a vertical height of the liquid storage cavity 120 to increase the volume of the liquid storage cavity 120, referring to FIG. 3 and FIG. 4, alternatively, the liquid outlet end 320 of the pump mechanism 300 can pump out the liquid along the second axis Y, and the liquid inlet end 310 and the liquid outlet end 320 of the pump mechanism 300 may be arranged on a side of the pump mechanism 300 along the direction of the second axis Y, where the second axis Y intersects the first axis X. In this way, the length of the pump mechanism 300 in the direction of the first axis X is shortened, and the length of the liquid storage cavity 120 in the direction of the first axis X is increased, such that the volume of the liquid storage cavity 120 is increased. Further, the direction of the second axis Y is perpendicular to the direction of the first axis X. As shown in FIG. 3 and FIG. 4, the direction of the first axis X is the up-down direction, the direction of the second axis Y is a left-right direction, and both the liquid inlet end 310 and the liquid outlet end 320 of the pump mechanism 300 are arranged on a left side of the pump mechanism 300.

To efficiently use side space of the pump mechanism 300, further, the connector 400 may be connected to a side (the left side as shown in FIG. 3 and FIG. 4) of the pump mechanism 300 along the direction of the second axis Y, such that the third flow channel 420 and at least part of the second flow channel 410 are positioned on the side (the left side as shown in FIG. 3 and FIG. 4) of the pump mechanism 300 along the direction of the second axis Y. A connection between the connector 400 and the liquid storage cavity 120 may be positioned on the side (the left side as shown in FIG. 4) of the pump mechanism 300 along the direction of the second axis Y, to shorten the distance between the liquid inlet end 310 of the pump mechanism 300 and the liquid storage cavity 120, such that it is easier for the pump mechanism 300 to pump the liquid in the liquid storage cavity 120.

Further, in the direction of the first axis X, the liquid inlet end 310 and the liquid outlet end 320 of the pump mechanism 300 may be closer to the liquid storage cavity 120. That is, the liquid inlet end 310 and the liquid outlet end 320 of the pump mechanism 300 are arranged at an end of the pump mechanism 300 closer to the liquid storage cavity 120 along the direction of the first axis X. In this way, the distance between the liquid inlet end 310 of the pump mechanism 300 and the bottom of the liquid storage cavity 120 is shortened, to make it easier for the pump mechanism 300 to pump the liquid in the liquid storage cavity 120. Furthermore, the distance between the liquid outlet end 320 of the pump mechanism 300 and the first flow channel 211 is increased, to reduce the impact force of the liquid at the liquid outlet end 320 of the pump mechanism 300 against the output shaft 210 of the motor 200, thereby improving the connection stability.

The oral cleaning apparatus 1000 provided in the embodiments of the present disclosure may also include an energy source 710, which may be a device such as a rechargeable battery or accumulator battery that can supply electrical energy to the motor 200, the pump mechanism 300, and electrical devices on a circuit board 720. To maintain the slim shape of the oral cleaning apparatus 1000, the energy source 710 may be positioned on a side (a lower side as shown in FIG. 3 and FIG. 4) of the pump mechanism 300 away from the motor 200 along the direction of the first axis X, and at least part of the energy source 710 is arranged side-by-side with at least part of the liquid storage cavity 120. That is, the energy source 710 and the liquid storage cavity 120 jointly occupy the bottom end 170 of the casing 100.

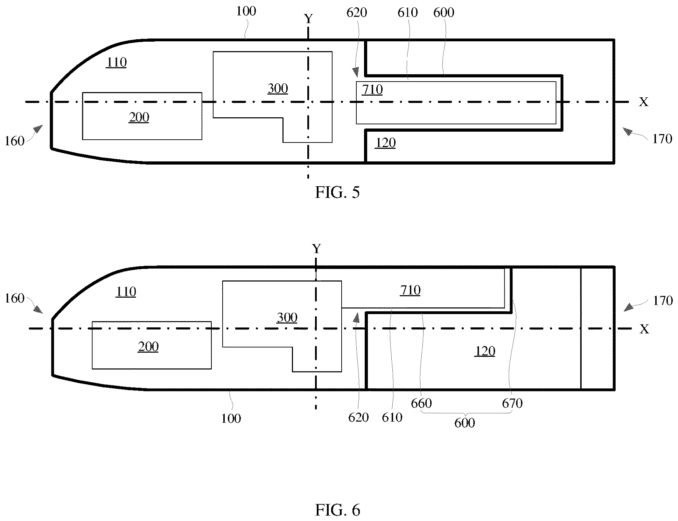

FIG. 5 is an another internal layout diagram of the oral cleaning apparatus according to an embodiment of the present disclosure. Referring to FIGS. 3 to 5, as an example, the liquid storage cavity 120 may wrap on a side of the energy source 710 in a first axial direction. For example, in FIG. 5, the liquid storage cavity 120 may wrap on an outer lateral surface and a bottom surface of the energy source 710. That is, in the first axial direction, the energy source 710 has a top surface and the bottom surface arranged opposite to each other, and the casing 100 may have an inner top surface and an inner bottom surface arranged opposite to each other. A spacing is provided between the bottom surface of the energy source 710 and the inner bottom surface of the casing 100, and at least part of the liquid storage cavity is positioned between the bottom surface of the energy source 710 and the inner bottom surface of the casing 100. That is, the liquid storage cavity 120 may be concave in shape, and the energy source 710 may be positioned in a hollow of the concave liquid storage cavity 120. For another example, the liquid storage cavity 120 may only wrap on the outer lateral surface of the energy source 710. That is, the bottom surface of the energy source 710 is propped on the inner bottom surface of the casing 100.

FIG. 6 is an another internal layout diagram of the oral cleaning apparatus 1000 according to an embodiment of the present disclosure. Referring to FIG. 6, as another example, a space for placing the energy source 710 is formed between the liquid storage cavity 120 and an inner casing wall of the casing 100. For example, in FIG. 6, the liquid storage cavity 120 may wrap on the bottom surface of the energy source 710 and at least part of the outer lateral surface of the energy source 710. That is, a spacing is provided between the bottom surface of the energy source 710 and the inner bottom surface of the casing 100, and at least part of the liquid storage cavity is positioned between the bottom surface of the energy source 710 and the inner bottom surface of the casing 100. That is, the liquid storage cavity 120 may be L-shaped, and the energy source 710 may be positioned at a gap of the L-shaped liquid storage cavity 120. For another example, the liquid storage cavity 120 may only wrap on the outer lateral surface of the energy source 710. That is, the bottom surface of the energy source 710 is propped on the inner bottom surface of the casing 100.

The liquid storage cavity 120 may be formed by a casing body 130 independent of the casing 100, and the liquid storage cavity 120 may be detachably connected to the casing 100, such that the user can remove the liquid storage cavity 120 from the casing 100 to clean it. Alternatively, the liquid storage cavity 120 may be formed by the inner casing wall of the casing 100 and a separator 600. Specifically, referring to FIG. 5 and FIG. 6, the oral cleaning apparatus 1000 provided in the embodiments of the present disclosure may also include the separator 600, which may be arranged in an inner cavity of the casing 100 and may be configured to separate the inner cavity of the casing 100 into a power cavity 110 and the liquid storage cavity 120. The motor 200, the pump mechanism 300 and the energy source 710 may be arranged in the power cavity 110.

Alternatively, a plane projection of the power cavity 120 along the first axis X at least partially does not overlap with a plane projection of the liquid storage cavity 110 along the first axis X, or the plane projection of the liquid storage cavity 110 along the first axis X at least partially does not overlap with the plane projection of the power cavity 120 along the first axis X.

Alternatively, the plane projection of the power cavity 120 along the first axis X at least partially overlaps with the plane projection of the liquid storage cavity 110 along the first axis X.

In FIG. 5 and FIG. 6, the separator 600 and the inner casing wall of the casing 100 positioned on a side (the left side as shown in FIG. 5 and FIG. 6) of the separator 600 along the direction of the first axis X may enclose to form the power cavity 110, and the separator 600 and the inner casing wall of the casing 100 positioned on other side (the right side as shown in FIG. 5 and FIG. 6) of the separator 600 along the direction of the first axis X may enclose to form the liquid storage cavity 120.

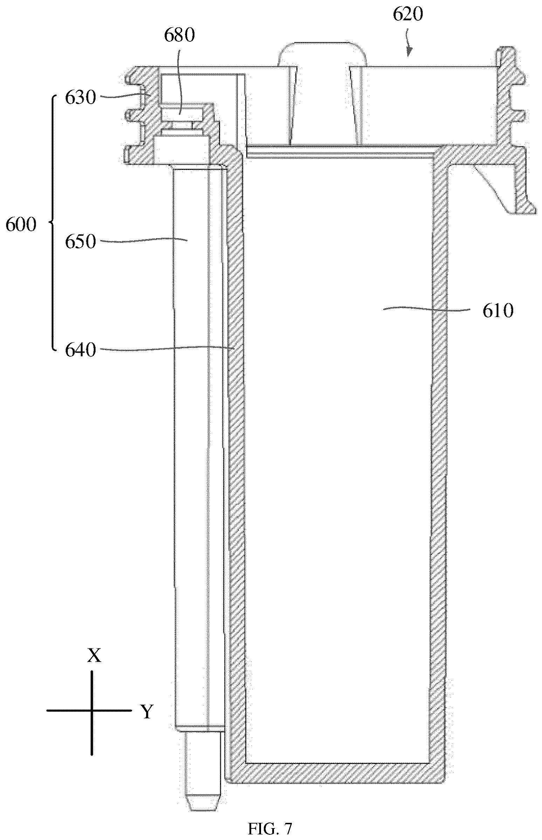

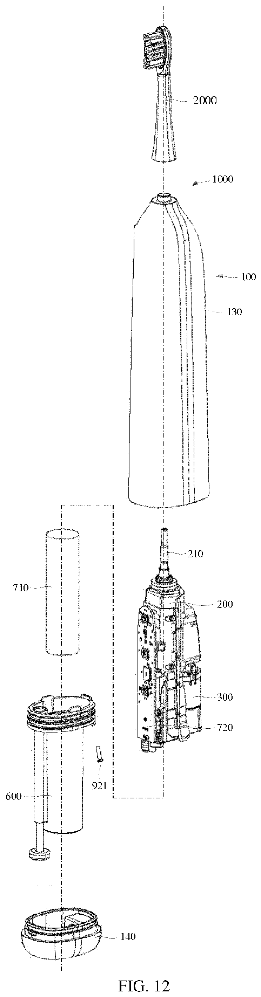

As an example, referring to FIG. 4 and FIG. 7, the separator 600 is detachably connected to the casing 100, so the user can remove the separator 600 from the casing 100 to clean it. A first sealing element 810 may be filled between the separator 600 and the casing 100 in consideration of tightness. For example, an outer sidewall of the separator 600 may be provided with a first sealing groove, and a first sealing cavity may be formed between the first sealing groove and the inner casing wall of the casing 100, where the first sealing element 810 may be a first sealing ring, which may be sealed in the first sealing cavity to prevent liquid leakage. In addition, the separator 600 may be detachably connected to the casing 100 by means of clamping connection; and/or, the separator 600 is securely connected to the connector 400 (or a mounting member 500 hereinafter mentioned) by means of fasteners such as bolts. Further, connection of the fasteners may be waterproofed. For example, referring to FIG. 12, the separator 600 may have a blind hole, the connector 400 or the mounting member 500 may be provided with a threaded hole, and a first fastener 921 may pass through the blind hole of the separator 600 and is connected to the threaded hole of the connector 400 or mounting member 500 by means of thread.

As another example, the separator 600 and the casing 100 may be an integrated element formed by means of an integrated forming process to facilitate assembly and improve connection strength.

FIG. 7 is a section view of the separator 600 shown in FIG. 4. Referring to FIG. 4 and FIG. 7, to communicate the liquid inlet end 310 of the pump mechanism 300 in the power cavity 110 with the liquid storage cavity 120, the separator 600 may have an intercommunicating pore 680 communicating the power cavity 110 with the liquid storage cavity 120, and the third flow channel 420 of the connector 400 may be communicated with the liquid storage cavity 120 through the intercommunicating pore 680. To shorten the distance between the liquid inlet end 310 of the pump mechanism 300 and the liquid storage cavity 120, alternatively, the intercommunicating pore 680 may be arranged on a side (the left side as shown in FIG. 4) of the pump mechanism 300 along the direction of the second axis Y.

To avoid liquid leakage, alternatively, the connector 400 may be hermetically connected to the intercommunicating pore 680 by means of a second sealing element 820. Specifically, a second sealing groove may be provided on the outer sidewall of the connector 400, and a second sealing cavity may be formed between the second sealing groove and an inner hole wall of the intercommunicating pore 680, where the second sealing element 820 may be a second sealing ring, which may be sealed in the second sealing cavity.

The separator 600 may form an accommodating hole 620 and an accommodating chamber 610 for accommodating the energy source 710, where the accommodating hole 620 may be arranged on a side (the upper side as shown in FIG. 4 and FIG. 7) of the accommodating chamber 610 towards the pump mechanism 300 along the direction of the first axis X. As shown in FIGS. 3 to 5 and FIG. 7, the separator 600 can separately form the accommodating hole 620 and the accommodating chamber 610. Alternatively, as shown in FIG. 6, the separator 600 may form, together with the inner casing wall of the casing 100, the accommodating hole 620 and the accommodating chamber 610.

In one possible structure of the separator 600, referring to FIGS. 3 to 5 and FIG. 7, when the liquid storage cavity 120 is wrapped on a side of the energy source 710 along the direction of the first axis X, the separator 600 may include a first part 630 and a second part 640 sequentially communicated along the direction of the first axis X, and the first part 630 is closer to the pump mechanism 300 than the second part 640. An inner sidewall of the first part 630 may form the accommodating cavity 620 and a part of the accommodating cavity 610, and an inner sidewall of the second part 640 may form another part of the accommodating cavity 610. An outer sidewall of the first part 630 and the inner casing wall of the casing 100 may match in shape, and the outer sidewall of the first part 630 is propped on the inner casing wall of the casing 100, and the first part 630 may form the intercommunicating pore 680. At least part of the liquid storage cavity 120 is formed between an outer sidewall of the second part 640 and the inner casing wall of the casing 100.

For example, the liquid storage cavity 120 may be internally provided with a fourth flow channel 651 communicating the bottom of the liquid storage cavity 120 with the intercommunicating pore 680. The fourth flow channel 651 may be formed by a separate tube body. Alternatively, the fourth flow channel 651 may be formed by the separator 600 to facilitate assembly and improve strength of connection between the fourth flow channel 651 and the intercommunicating pore 680. Specifically, referring to FIG. 4, the separator 600 may also include a third part 650, which is integrally connected to the first part 630. The third part 650 may have a fourth flow channel 651 for liquid flow, and the fourth flow channel 651 may communicate the intercommunicating pore 680 with a side of the liquid storage cavity 120 away from the pump mechanism 300. Further, the fourth flow channel 651 may extend along the direction of the first axis X to reduce the length of the waterway between the liquid inlet end 310 of the pump mechanism 300 and the side of the liquid storage cavity 120 away from the pump mechanism 300.

In another possible structure of the separator 600, referring to FIG. 6, when space for placing the energy source 710 is formed between the liquid storage cavity 120 and the inner casing wall of the casing 100, the separator 600 may include a fourth part 660, which may extend along the direction of the first axis X . At least part of the liquid storage cavity 120 may be formed between the fourth part 660 and a part of the inner casing wall of the casing 100, and at least part of the accommodating cavity 610 may be formed between the fourth part 660 and another part of the inner casing wall of the casing 100.

Further, the separator 600 may also include a fifth part 670, where the fifth part 670 may be connected between the fourth part 660 and the inner casing wall of the casing 100, and the fifth part 670 may provide support to the energy source 710 in the direction of the first axis X.

Referring to FIG. 1, the water tank of the related oral cleaner generally is provided with an air vent. When the pump mechanism 300 is pumping water, the air vent may allow air to flow into the water tank and fill space of liquid loss, to ensure that the inner cavity of the water tank is communicated with outside world. Beauty of the oral cleaning apparatus 1000 is adversely affected if the related air vent is exposed. In addition, when the user holds the body, there may be a risk of blocking the air vent, which may adversely affect operation of the water pump. Furthermore, when the air vent is designed inside the body, it is required to additionally provided air vent pipelines in the inner cavity, which increases design difficulty.

In view of the above technical problems, the inventor of the present disclosure thinks of an idea of splitting the body into two parts that may be nested with each other to communicate the inner cavity of the water tank with the outside world by means of a fit-up gap between the two parts. In this way, beauty of the apparatus may be realized because it is non-porous in appearance. However, it is difficult to accurately control the fit-up gap. Some products on a same production line have a larger fit-up gap and thus have a risk of liquid leakage, and some products have a smaller fit-up gap, which makes it difficult for external gas to pass through. On this basis, the inventor of the present disclosure proposes to form a microchannel between mating surfaces of the two parts, where a cross section of the microchannel may be set to be smaller, such that it can allow the gas to flow and prevent the liquid from flowing out. The fit-up gap may be made slightly larger, such that it is easy for the external gas to pass through, and also it is easy to ensure that there is little difference between the fit-up gaps of the products on the same production line.

Specifically, referring to FIG. 3, the casing 100 may include a casing body 130 and a cover body 140. The casing body 130 may include a top wall and a sidewall, where the sidewall of the casing body 130 may be connected to an outer perimeter of the top wall of the casing body 130 and may extend along the direction of the first axis X. The top wall of the casing body 130 may have a through hole 530 for the output shaft 210 of the motor 200 to pass through. The casing body 130 may have an opening, which may be arranged, as shown in FIG. 3, at one end of the casing body 130 along the direction of the first axis X and may be arranged opposite to the top wall of the casing body 130. Alternatively, the opening may be arranged on the sidewall of the casing body 130.

The cover body 140 can cover the opening of the casing body 130, such that the casing body 130 and the cover body 140 may enclose to form the inner cavity of the casing. The cover body 140 and the casing body 130 may be nested within each other along a preset direction. The preset direction may be the direction of the first axis X, or the preset direction may intersect the direction of the first axis X.

Specifically, the cover body 140 may include a bottom wall and a sidewall, where the sidewall of the cover body 140 may be connected to an outer periphery of the bottom wall of the cover body 140 and may extend along a certain direction, and the sidewall and the bottom wall of the cover body 140 may form an inner cavity of the cover body 140 having an opening at one end. The sidewall of the cover body 140 may be embedded, as shown in FIG. 3, in the inner cavity of the casing body 130, or the sidewall of the cover body 140 may be nested on an outer side of the casing body 130. In addition, the cover body 140 and the casing body 130 may form at least part of the liquid storage cavity 120.

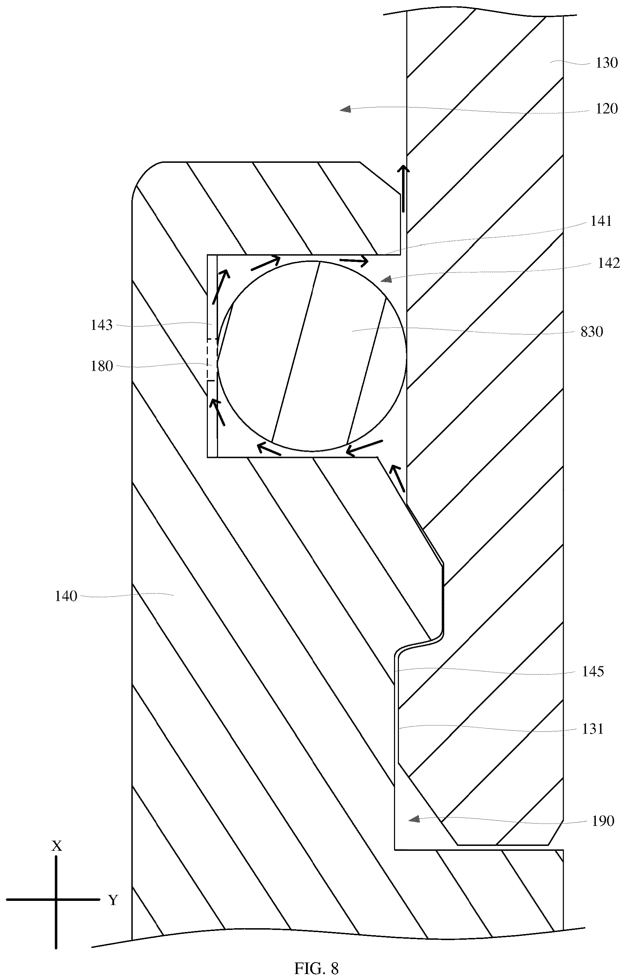

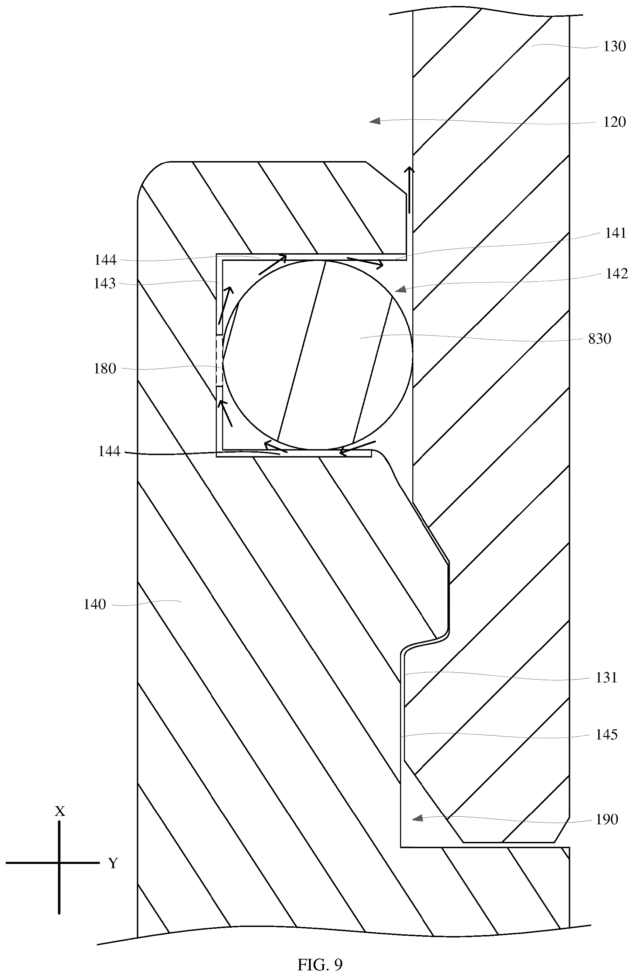

With reference to FIG. 8 and FIG. 9, the cover body 140 may have a first mating surface 145, the casing body 130 may have a second mating surface 131 arranged opposite to the first mating surface 145, and a fit-up gap 190 may be formed between the first mating surface 145 and the second mating surface 131. For example, in FIG. 3, the cover body 140 may be embedded in the inner cavity of the casing body 130, where an outer lateral surface of the cover body 140 embedded in the casing body 130 may be the first mating surface 145, and an outer lateral surface of the casing body 130 nested on the outer side of the cover body 140 may be the second mating surface 131. For another example, the cover body 140 may be nested on the outer side of the casing body 130, an inner side surface of the cover body 140 may be the first mating surface 145, and an outer lateral surface of the casing body 130 may be the second mating surface 131. In this way, a flow channel of a gas may be hidden inside the apparatus to avoid blocking the flow channel of the gas, which has the advantages of easy for gas ventilation and non-porous in appearance.

In addition, a microchannel 180 may be formed between the casing body 130 and the cover body 140. The microchannel 180 can allow the gas to pass through along the direction of the first axis X and obstruct the liquid from flowing out, and the microchannel 180 communicates the liquid storage cavity 120 with the outside world by means of the fit-up gap 190 between the casing body 130 and the cover body 140. Alternatively, the liquid storage cavity 120 may be higher than the microchannel 180 along the preset direction. In this way, a water level in the liquid storage cavity 120 may be higher than the microchannel 180.

Specifically, the liquid level in the liquid storage cavity 120 may be higher than the microchannel 180, such that a pressure difference is created between external pressure (one bar) and gas pressure (less than one bar) inside the liquid storage cavity 120. Under the action of the pressure difference, the gas can be allowed to flow and the liquid can be prevented from flowing out to achieve the purpose of gas ventilation and leakage prevention. It is worth noting that "the liquid can be prevented from flowing out" mentioned above may be understood in a broad sense, which means that when the oral cleaning apparatus 1000 is in a static state or the user normally grips it, the microchannel 180 can prevent the liquid from flowing out. When the user shakes the oral cleaning apparatus vigorously, surface tension may be broken, which may affect the gas pressure, such that the liquid may leak out of the microchannel 180.

It is described below with reference to FIG. 8 and FIG. 9 how the microchannel 180 is formed. Specifically, a sidewall of either one of the casing body 130 and the cover body 140 may be provided with a third sealing groove 141, and the third sealing groove 141 may have an opening facing toward the outer side. A sidewall of the other one of the casing body 130 and the cover body 140 may enclose, together with the third sealing groove 141, to form a third sealing cavity 142, where the third sealing cavity 142 may communicate the liquid storage cavity 120 with the outside world by means of the fit-up gap 190. A groove bottom of the third sealing groove 141 may be provided with an airflow groove 143, which may have an opening facing towards the third sealing cavity 142.

For example, in FIG. 8 and FIG. 9, the cover body 140 is embedded in the inner cavity of the casing body 130, and the sidewall of the cover body 140 may be provided with the third sealing groove 141, which may have an opening facing towards the outer side. The sidewall of the casing body 130 may enclose, together with the third sealing groove 141, to form the third sealing cavity 142. For another example, the cover body 140 may be nested on the outer side of the casing body 130, and the sidewall of the casing body 130 may be provided with the third sealing groove 141, which may have an opening facing towards the outer side. The sidewall of the cover body 140 may enclose, together with the third sealing groove 141, to form the third sealing cavity 142.

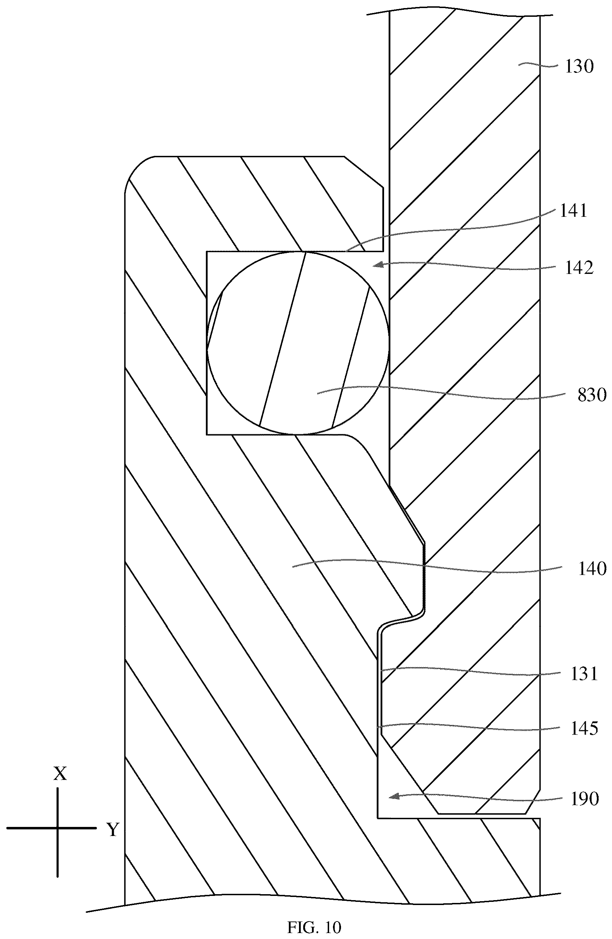

FIG. 10 is a partial section view of the casing 100 at a non-airflow groove 143 according to an embodiment of the present disclosure. With reference to FIG. 10, the casing 100 may also include a third sealing element 830, which may be clamped between the inner sidewall of the other one of the casing body 130 and the cover body 140 and the groove bottom of the third sealing groove 141. A cross-section shape of the third sealing element 830 may be a circle, a polygon, and so on, but not limited thereto.

With continued reference to FIG. 8 and FIG. 9, the microchannel 180 is formed between a surface of the third sealing element 830 close to the airflow groove 143 and the airflow groove 143. Thus, the sealing cavity is sealed by the third sealing element 830 at the non-airflow groove 143. At the airflow groove 143, a microchannel 180 is formed, which can allow the gas to flow through and prevent the liquid from flowing through. A machining depth of the airflow groove 143 is generally more accurate, such that a size of the microchannel 180 formed may be precisely controlled. Thus, the casing 100 provided in the embodiment of the present disclosure not only can achieve gas ventilation and liquid barrier, but also has a high yield. In addition, when the pump mechanism 300 pumps the liquid, the third sealing element 830 may be subjected to extruding deformation, making the fit-up gap larger, which is more conducive to achieving the effect of air intake.

A liquid level difference h formed between a highest liquid level height of the liquid storage cavity 120 and a height of a horizontal plane of the airflow groove 143 meets 0<ρ*g*h≤30%*Po, where ρ represents air density, g represents liquid density, and Po represents one bar atmospheric pressure. The ρ represents air density, g represents liquid density, and Po represents one bar atmospheric pressure.

Specifically, the greater the difference between the liquid pressure inside the liquid storage cavity 120 and the external atmospheric pressure is, the more easily the gas can flow from the outside world to the liquid storage cavity 120, and the more likely the liquid leakage can be avoided. On the contrary, the smaller the difference between the liquid pressure inside the liquid storage cavity 120 and the external atmospheric pressure is, the less easily the gas can flow from the outside world to the liquid storage cavity 120, and the more likely the liquid leakage may occur. As verified by the inventor of the present disclosure, the microchannel 180 can allow the gas to pass through and prevent the liquid from flowing out when the liquid level difference h meets the above conditions.

To further prevent the liquid leakage, the liquid level difference h may meet 0<ρ*g*h≤20%*Po; and to still further prevent the liquid leakage, the liquid level difference h may meet 0<ρ*g*h≤10%*Po. For example, ρ*g*h≤10%*Po, ρ*g*h<5%*Po, and ρ*g*h≤1%*Po.

Further, the depth of the airflow groove 143 may range between 0.1 mm and 0.4 mm, such that the liquid can be prevented from flowing through while the gas passes through. For example, the depth of the airflow groove 143 may be 0.1 mm, 0.3 mm, and 0.4mm, etc. Further, the depth of the airflow groove 143 may range between 0.25 mm and 0.34 mm, to further achieve gas ventilation and liquid barrier. For example, the depth of the airflow groove 143 may be 0.25 mm, 0.30 mm, and 0.34mm, etc.

In the preset direction, the third sealing groove 141 may have two groove sidewalls arranged opposite to each other, as shown in FIG. 8 and FIG. 9, where a groove bottom wall of the third sealing groove 141 may be connected between the two groove sidewalls. Alternatively, the third sealing groove 141 may have a first groove sidewall, which may be used to support one side of the third sealing element 830.

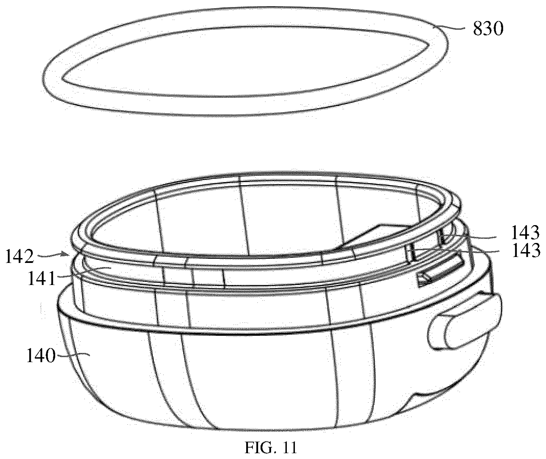

When the third sealing element 830 has two groove sidewalls, to allow the gas in the third sealing cavity 142 to flow in or out, as an example, referring to FIG. 8, a height of the third sealing element 830 may be less than that of the groove bottom wall in the preset direction. Thus, a channel communicated with the microchannel 180 may be formed between the third sealing element 830 and one of the groove sidewalls, and another channel communicated with the microchannel 180 may also be formed between the third sealing element 830 and the other groove sidewall. Thus, the gas entering the third sealing cavity 142 may flow around the third sealing element 830 at least half a cycle as marked by arrows shown in FIG. 8, and then flow out of the third sealing cavity 142. Further, the airflow groove 143 may run through the groove bottom wall along the preset direction, as shown in FIG. 11.

As another example, referring to FIG. 9, each of the two inner sidewalls may be provided with a flow guide groove 144, the flow guide groove 144 may have an opening facing towards the third sealing cavity 142, and a channel for the gas to flow through may be formed between the flow guide groove 144 and the third sealing element, where the channel is communicated with the microchannel 180. The gas entering the third sealing cavity 142 flows, through the channel and the microchannel 180, around the third sealing element 830 at least half a cycle as marked by arrows shown in FIG. 9, and then flows out of the third sealing cavity 142. Further, the flow guide groove 144 may run through the groove sidewall along a direction perpendicular to the groove bottom wall.

Similarly, when the third sealing element 830 has one groove sidewall, inflow and outflow of the gas in the third sealing cavity 142 may be achieved by reducing the height of the third sealing element 830 or by providing the flow guide groove 144 on the groove sidewall.

Alternatively, referring to FIG. 11, a circumferential length of the airflow groove 143 is shorter than that of the sealing groove. There may be one or more airflow grooves 143. When there is a plurality of airflow grooves 143, the plurality of airflow grooves 143 may be arranged at intervals.

Alternatively, the cover body 140 is detachably connected to the casing body 130, such that when the liquid needs to be drained from the liquid storage cavity 120, the cover body 140 may be dismantled from the casing body 130 to achieve the purpose of rapid liquid drainage.

FIG. 12 is an exploded view of the oral cleaner according to an embodiment of the present disclosure. With reference to FIG. 12, the oral cleaner provided in the embodiment of the present disclosure may also include a mounting member 500. To facilitate assembly, the mounting member 500 is fixed to the inner casing wall of the casing 100, and both the motor 200 and the pump mechanism 300 may be installed in the mounting member 500. Thus, during the assembly, the motor 200 and the pump mechanism 300 may be first assembled on the mounting member 500, and then they are installed as one assembly into the casing 100.

It should be noted that both the motor 200 and the pump mechanism 300 may vibrate during operation, which leads to poor reliability of connection between pipelines connecting the liquid outlet end 320 of the pump mechanism 300 and the first flow channel 211 of the output shaft 210, making them easy to fall off. In view of the above problems, the inventor of the present disclosure thinks of an idea of disassembling the pump mechanism 300 into a power end 330, the liquid inlet end 310 and the liquid outlet end 320, and integrating the liquid outlet end 320 onto the connector 400 and the mounting member 500 to reduce sympathetic vibration. In this way, reliability of the connection between the second flow channel 410 of the connector 400 and the liquid outlet end 320 of the pump mechanism 300 is improved.

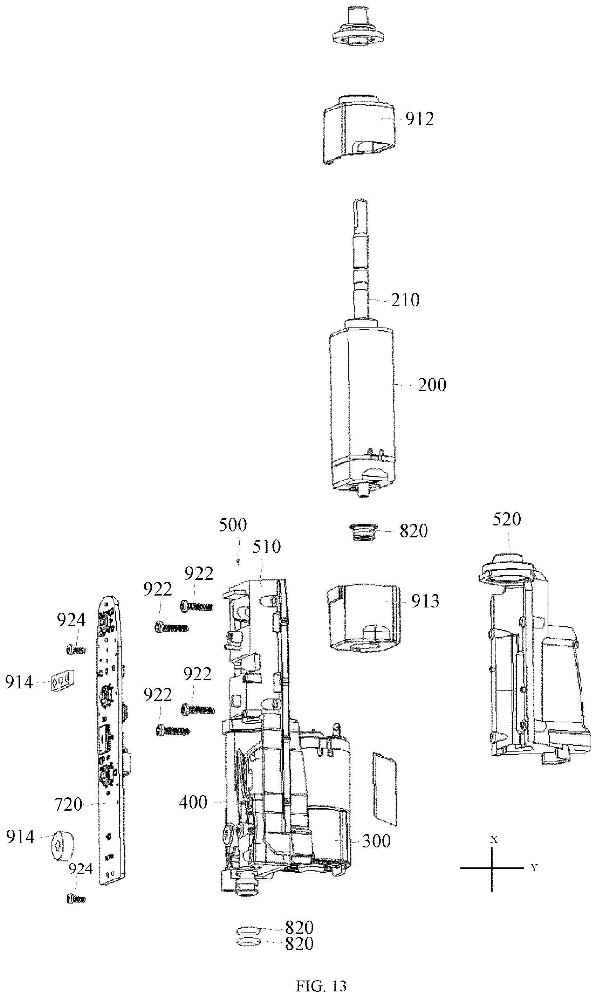

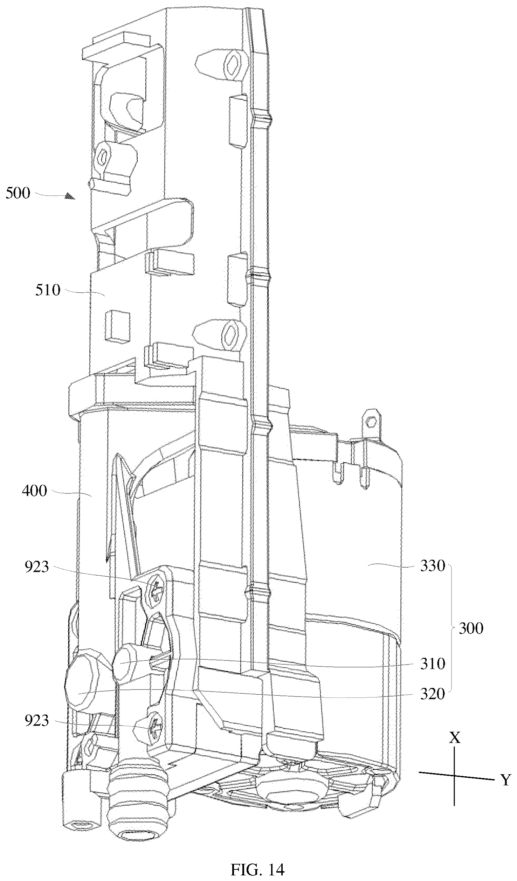

Specifically, referring to FIGS. 13 to 16, a second valve part 321 of the liquid outlet end 320 may be integrated into the mounting member 500, and a second end cover part 322 of the liquid outlet end 320 may be integrated into the connector 400. The power end 330, at least part of the connector 400, and at least part of the mounting member 500 may be arranged sequentially along a liquid outlet direction (the direction of the second axis Y) of the liquid outlet end 320, and may be connected by means of a third fastener 923. Thus, the mounting member 500 is separated between the connector 400 and the power end 330 of the pump mechanism 300, such that most of vibrations of the pump body are transmitted to the mounting member 500. A vibration damper may be arranged between the mounting member 500 and the inner casing wall of the casing 100, and the vibration of the mounting member 500 may be eliminated through vibration damping connection, such that the vibration transmitted from the power end 330 of the pump mechanism 300 to the connector 400 is so little that adverse impact of the vibration of the power end 330 of the pump mechanism 300 on the connector 400 is reduced. Thus, the reliability of connection between the second flow channel 410 of the connector 400 and the liquid outlet end 320 of the pump mechanism 300 is improved. In addition, the liquid outlet end 320 is integrated onto the mounting member 500 and the connector 400, which is not only convenient for assembly, but also has shorter waterways and higher connection reliability.

Alternatively, the power end 330 may include a pump housing 331 and a piston 332, where one end of the pump housing 331 may have an opening. The mounting member 500 can seal the opening, and the mounting member 500 and the pump housing 331 may enclose to form the pump chamber of the pump mechanism 300 for reciprocating movement of the piston 332 along a liquid discharge direction of the liquid outlet end 320. The mounting member 500 may have a liquid outlet hole penetrating through the mounting member 500 and communicated with the pump chamber of the pump mechanism 300, the second valve part 321 of the liquid outlet end 320 is arranged in the liquid outlet hole, and the second valve part 321 of the liquid outlet end 320 can allow the liquid to be pumped out of the pump chamber through the liquid outlet hole and prevent the liquid from flowing into the pump chamber through the liquid outlet hole.

Specifically, the reciprocating movement of the piston 332 in the pump chamber may enable the liquid in the pump chamber to be pumped out of the liquid outlet hole. The valve at the liquid outlet end 320 has unidirectional continuity, to prevent the liquid from flowing back to the pump chamber through the liquid outlet hole. In this solution, the pump chamber and the liquid outlet hole are formed by means of the mounting member 500 to realize the purpose of integrating the valve part of the liquid outlet end 320.

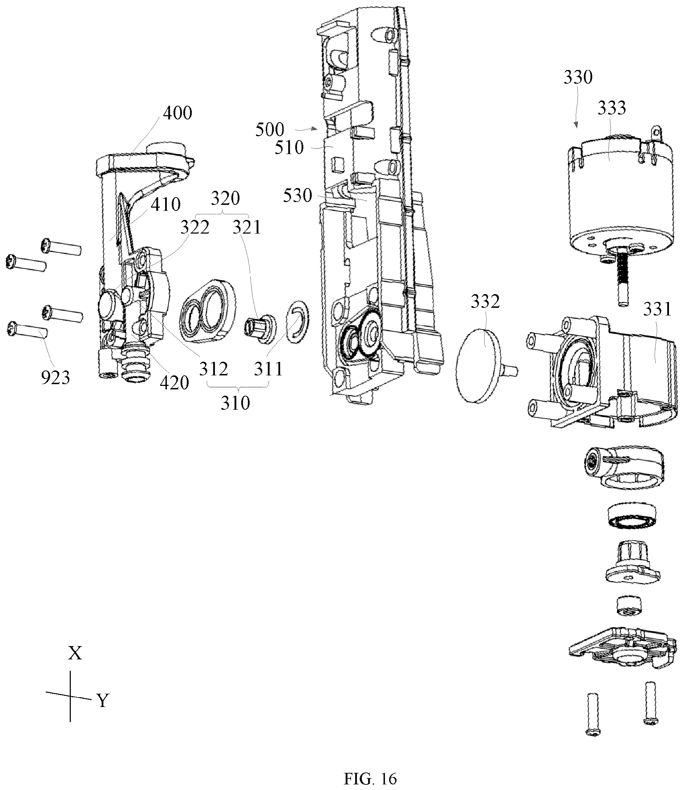

Alternatively, referring to FIG. 16, the power end 330 may also include a driving member 333, which may have a drive shaft rotating with respect to the pump housing 331. The drive shaft can drive an eccentric wheel to rotate with respect to the pump housing 331, and the eccentric wheel can touch the piston 332 to carry out a reciprocating movement.

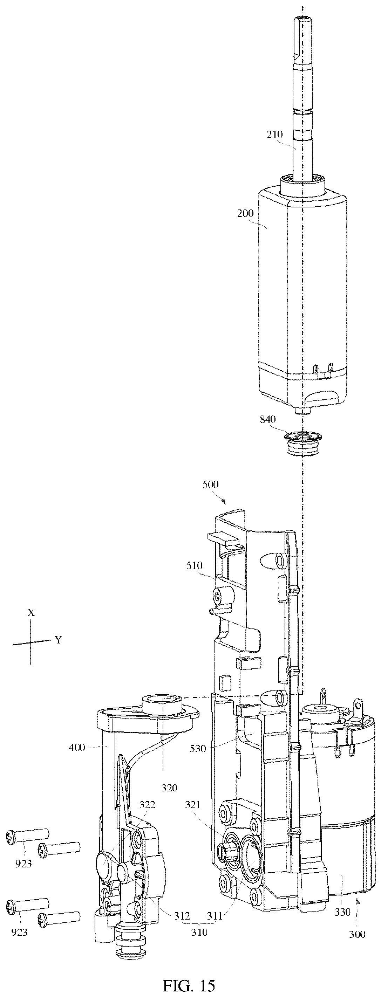

With reference to FIGS. 15 to 17, alternatively, at least part of the connector 400 and the second end cover part 322 of the liquid outlet end 320 may be fabricated into an integrated element by means of an integrated forming process. The second end cover part 322 of the liquid outlet end 320 may cover the liquid outlet hole, and the second end cover part 322 of the liquid outlet end 320 may form a liquid outlet flow channel communicating the liquid outlet hole with the second flow channel 410.

Specifically, a liquid outlet channel of the second end cover part 322 of the liquid outlet end 320 can guide a flow direction of the liquid flowing out of the liquid outlet hole. In this solution, the connector 400 and the second end cover part 322 of the liquid outlet end 320 are fabricated into an integrated element, such that the liquid outlet channel and the second flow channel 410 are integrated, which is conducive to improving the connection reliability, improving smoothness of liquid flow, and improving convenience of assembly.

Alternatively, the mounting member 500 may have a liquid outlet hole penetrating through the mounting member 500 and communicated with the pump chamber of the pump mechanism 300. The first valve part 311 of the liquid inlet end 310 may be arranged in the liquid inlet hole, and the first valve part 311 of the liquid inlet end 310 can allow the liquid to be pumped into the pump chamber through the liquid inlet hole and prevent the liquid from flowing out through the liquid inlet hole.

Specifically, the reciprocating movement of the piston 332 in the pump chamber may enable the liquid to be pumped into the pump chamber through the liquid inlet hole. The valve at the liquid inlet end 310 has unidirectional continuity, to prevent the liquid from flowing out through the liquid inlet hole. In this solution, the pump chamber and the liquid inlet hole are formed by means of the mounting member 500 to realize the purpose of integrating the first valve part 311 of the liquid inlet end 310.

Alternatively, at least part of the connector 400 and the first end cover part 312 of the liquid inlet end 310 may be fabricated into an integrated element by means of an integrated forming process. The first end cover part 312 of the liquid inlet end 310 may cover the liquid inlet hole, and the first end cover part 312 of the liquid inlet end 310 can form a liquid inlet flow channel communicating the liquid inlet hole, and the liquid inlet flow channel may be communicated with the third flow channel 420 of the connector 400. Thus, the liquid inlet channel of the first end cover part 312 of the liquid inlet end 310 can guide the flow direction of the liquid flowing into the liquid inlet hole. In this solution, the connector 400 and the first end cover part 312 of the liquid inlet end 310 are fabricated into an integrated element, such that the liquid inlet channel and the third flow channel 420 are integrated, which is conducive to improving the connection reliability, improving the smoothness of liquid flow, and improving the convenience of assembly.

Referring to FIGS. 13 to 16, alternatively, the mounting member 500 may include a first mounting member 510. The first mounting member 510 may have a first side and a second side arranged opposite to each other along the liquid discharge direction of the liquid outlet end 320. The motor 200 and the power end 330 of the pump mechanism 300 may be arranged on the first side of the first mounting part 510 at intervals along the axial direction of the output shaft 210. Part of the connector 400, into which the second end cover part 322 of the liquid outlet end 320 is integrated, may be arranged on the second side of the first mounting part 510. The mounting member 500 may have a through hole 530 for allowing the connector 400 to pass through and limiting the connector 400 to be on at least one side along the axial direction of the output shaft 210. Thus, the connector 400 may be restricted by the through hole 530 to provide upward support and limit for the connector 400, thereby avoiding the connector 400 from vibrating up and down. Alternatively, the circuit board 720 may be mounted on a side of the first mounting part 510 away from the motor 200 by means of the third fastener 924. A fourth vibration damper 914 may be arranged between the circuit board 720 and the inner casing wall of the casing 100.

With reference to FIG. 12 and FIG. 13, alternatively, the mounting member 500 may include a second mounting part 520. The second mounting part 520 may be in an involutory connection to the first side of the first mounting part 510, and the second mounting part 520 and the first mounting part 510 may enclose to form accommodation space for wrapping the outer lateral surface of the motor 200. In this way, the mounting member 500 is wrapped on the outer lateral surface of the motor 200, such that most of the vibrations of the motor 200 is transmitted to the mounting member 500, such that the vibration transmitted from the motor 200 to the connector 400 is so little that adverse impact of the vibration of the power end 330 of the motor 200 on the connector 400 is reduced. Thus, the reliability of connection between the second flow channel 410 of the connector 400 and the first flow channel 211 of the motor 200 is improved. Alternatively, referring to FIG. 13, the first mounting part 510 and the second mounting part 520 may be securely connected by means of a second fastener 922.

Alternatively, a vibration damper is sandwiched between the first mounting part 510 and the outer lateral surface of the motor 200; and/or a vibration damper is sandwiched between the second mounting part 520 and the outer lateral surface of the motor 200. In this way, vibration transmission between the motor 200 and the mounting member 500 may be reduced by means of the vibration damper. For example, in FIG. 13, a second damper 912 is sandwiched between a front end of the motor 200 and the mounting member 500, and a third damper 913 is sandwiched between a rear end of the motor 200 and the mounting member 500.

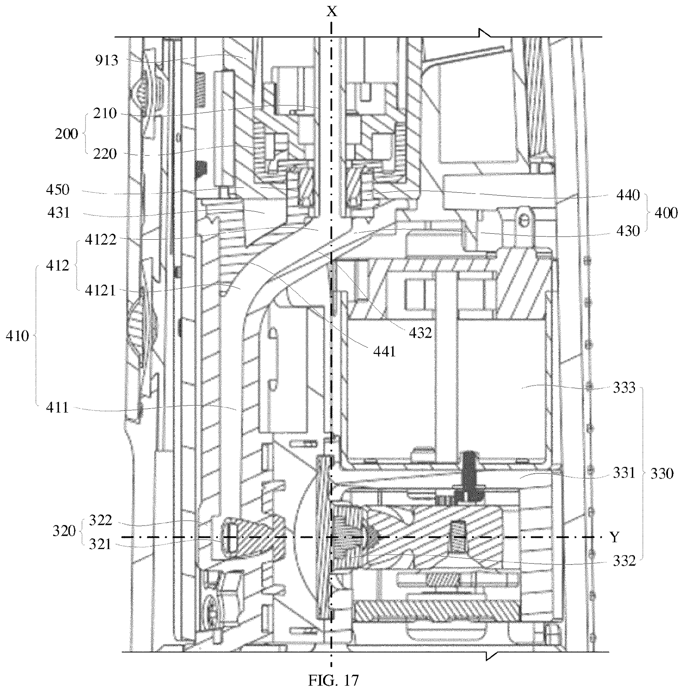

With reference to FIG. 17, alternatively, the connector 400 may have a mounting groove 450 for penetration by the output shaft 210 of the motor 200, and a fourth sealing element 840 may be filled between the inner sidewall of the mounting groove 450 and the output shaft 210 of the motor 200. Specifically, the first flow channel 211 of the output shaft 210 may be communicated, at the mounting groove 450, with the second flow channel 410 of the connector 400. Arrangement of the sealing element can prevent liquid leakage at the connection.

With continued reference to FIG. 17, alternatively, the motor 200 may include the motor body 220 and the output shaft 210. The output shaft 210 of the motor 200 may pass through the motor body 220, and two ends of the output shaft 210 along its axial direction may penetrate through the motor body 220. The bottom surface of the motor body 220 and the inner groove wall of the mounting groove 450 may enclose to form a confining space for confining the fourth sealing element 840. The confining space can confine two ends of the fourth sealing element 840 along the axial direction of the output shaft 210. Thus, the fourth sealing element 840 may be restricted by the bottom surface of the motor body 220 of the motor 200 and the groove bottom wall of the mounting groove 450, to prevent the fourth sealing element 840 from moving with vibration.

With reference to FIG. 17, the second flow channel 410 may include a first flow segment 411 and a second flow segment 412 communicated sequentially. The first flow segment 411 is communicated with the liquid outlet end 320 and may extend along the direction of the first axis X, and a spacing is provided between the first flow segment 411 and the first flow channel 211 along the direction of the second axis. The second flow segment 412 may communicate the first flow segment 411 with the first flow channel 211, and the second flow segment 412 may include the first arc segment 4121, where circular arc transition is achieved between the first arc segment 4121 and the first flow segment 411. Use of the circular arc transition can reduce resistance of an inner wall of the flow channel to the liquid, which is conducive to flow of the liquid.

Further, the first arc segment 4121 may be higher than the pump mechanism 300, and the first arc segment 4121 may have an arc center facing toward the pump mechanism 300, such that the liquid flows more gently toward the first flow channel 211 to further reduce the resistance of the inner wall of the flow channel to the liquid.

Alternatively, the second flow segment 412 also includes a second arc segment 4122, where circular arc transition is achieved between the second arc segment 4122 and the first flow channel 211. Use of the circular arc transition can reduce the resistance of the inner wall of the flow channel to the liquid, which is conducive to flow of the liquid.

Further, the second arc segment 4122 has an arc center toward the motor 200 such that the second arc segment 4122 smoothly borders with the first flow channel 211, which is conducive to flow of the liquid.

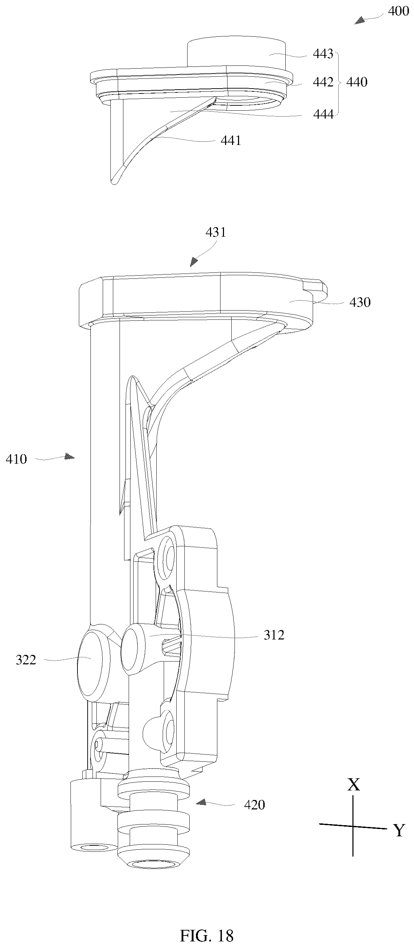

With reference to FIG. 17 and FIG. 18, alternatively, the connector 400 may include a first connection part 430 and a second connection part 440 connected to each other. The first connection part 430 may have the first flow segment 411 and a reversing chamber 431 communicated with the first flow segment 411, where the reversing chamber 431 may have a first intrados 432, and the reversing chamber 431 may have an opening along the direction of the first axis X. At least part of the second connection part 440 may be embedded in the reversing chamber 431 through the opening of the reversing chamber 431 and may have a second intrados 441. The first intrados 432 and the second intrados 441 may enclose to form the second flow segment 412.

Specifically, the second connection part 440 may include a cover plate segment 442, a convex segment 443, and a baffle segment 444. The convex segment 443 and the baffle segment 444 may be connected to two sides of the cover plate segment 442 along the direction of the first axis X, respectively. The cover plate segment 442 may cover the reversing chamber 431, and the baffle segment 444 may be positioned in the reversing chamber 431 and may have the second intrados 441. The cover plate segment 442 may be provided with a via hole, the convex segment 443 may surround an outer side of the via hole, and an inner cavity of the convex segment 443 may be communicated with the via hole. The output shaft 210 may pass through the inner cavity of the convex segment 443 and the via hole, and the fourth sealing element 840 is arranged between the output shaft 210 and an inner cavity wall of the convex segment 443. Thus, the convex segment 443 and part of the cover plate segment 442 may form the mounting groove 450 mentioned above.

The terms such as "upper" and "lower" used to describe relative positional relationships of various structures in the drawings are merely for the purpose of concise description rather than limiting the implementable scope of the present disclosure. The changes or adjustments of the relative relationship without a substantial modification to the technical solutions are regarded as being covered by the implementable scope of the present disclosure.

It is to be noted that in the present disclosure, unless specified or limited otherwise, a first feature "on" or "below" a second feature may include an embodiment in which the first feature is in direct contact with the second feature, and may also include an embodiment in which the first feature and the second feature are in indirect contact via an intermediary. Furthermore, a first feature "on," "above," or "on top of" a second feature may include an embodiment in which the first feature is right or obliquely "on," "above," or "on top of" the second feature, or just means that the first feature is at a height higher than that of the second feature. A first feature "below," "under," or "on bottom of" a second feature may include an embodiment in which the first feature is right or obliquely "below," "under," or "on bottom of" the second feature, or just means that the first feature is at a height lower than that of the second feature.

In addition, in the present disclosure, unless specified or limited otherwise, terms "mounted", "connected", "coupled", "fixed" and so on should be understood in a broad sense, which may be, for example, a fixed connection, a detachable connection or integrated connection, a direct connection or indirect connection by means of an intermediary, an internal communication between two elements or an interaction relationship between two elements. The specific significations of the above terms in the present disclosure may be understood in the light of specific conditions by persons of ordinary skill in the art.

Reference throughout this specification to the terms "an embodiment," "some embodiments," "an exemplary embodiment," "an example," "a specific example," or "some examples," means that a specific feature, structure, material, or characteristic described in connection with the embodiment or example is included in at least one embodiment or example of the present disclosure. The schematic representation of the above terms throughout this specification is not necessarily referring to the same embodiment or example. Furthermore, the specific features, structures, materials, or characteristics set forth may be combined in any suitable manner in one or more embodiments or examples.

Finally, it should be noted that the foregoing embodiments are merely intended for describing the technical solutions of the present disclosure, but not for limiting the present disclosure. Although the present disclosure is described in detail with reference to the foregoing embodiments, persons of ordinary skill in the art should understand that they may still make modifications to the technical solutions described in the foregoing embodiments or make equivalent replacements to some or all technical features thereof, which does not make corresponding technical solutions in essence depart from the scope of the technical solutions of the embodiments of the present disclosure.

## Claims

1. A casing for oral cleaning, comprising a casing body (130) and a cover body (140), wherein the casing body (130) has an opening, the cover body (140) covers the opening of the casing body (130); the cover body (140) and the casing body (130) are nested within each other along a preset direction, and the cover body (140) and the casing body (130) form a liquid storage cavity (120); and
a microchannel (180) is formed between the casing body (130) and the cover body (140), the microchannel (180) allows a gas to pass through along the preset direction and obstructs a liquid from flowing out, and the microchannel (180) communicates the liquid storage cavity (120) with outside world by means of a fit-up gap (190) between the casing body (130) and the cover body (140).

2. The casing for oral cleaning according to claim 1, wherein a sealing groove (141) is provided on a sidewall of one of the casing body (130) and the cover body (140), and the sealing groove (141) has an opening facing toward an outer side; a sealing cavity (142) is formed by enclosing a sidewall of other one of the casing body (130) and the cover body (140) with the sealing groove (141), the sealing cavity (142) communicates the liquid storage cavity (120) with the outside world by means of the fit-up gap (190), an airflow groove (143) is provided on a groove bottom wall of the sealing groove (141), and the airflow groove (143) is provided with an opening facing toward the sealing cavity (142); and
the casing (100) further comprises a sealing element (830), the sealing element (830) is clamped between an inner sidewall of the other one of the casing body (130) and the cover body (140) and a groove bottom wall of the sealing groove (141), and the microchannel (180) is formed between a surface of the sealing element (830) close to the airflow groove (143) and the airflow groove (143).

3. The casing for oral cleaning according to claim 2, wherein a liquid level difference h formed between a highest liquid level height of the liquid storage cavity (120) and a height of a horizontal plane of the airflow groove (143) meets 0<ρ*g*h≤30%*Po,
wherein ρ represents air density, g represents liquid density, and Po represents one bar atmospheric pressure.

4. The casing for oral cleaning according to claim 3, wherein the height difference h meets 0<ρ*g*h≤20%*Po.

5. The casing for oral cleaning according to claim 3, wherein the height difference h meets 0<ρ*g*h≤10%*Po.

6. The casing for oral cleaning according to claim 5, wherein a depth of the airflow groove (143) ranges from 0.1 mm to 0.4 mm.

7. The casing for oral cleaning according to claim 6, wherein the depth of the airflow groove (143) ranges from 0.25 mm to 0.35 mm.

8. The casing for oral cleaning according to claim 5, wherein the sealing groove (141) has a groove bottom wall and two groove sidewalls, and the two groove sidewalls are connected onto two sides of the groove bottom wall along the preset direction; and
in the preset direction, a height of the sealing element (830) is less than a height of the groove bottom wall.

9. The casing for oral cleaning according to claim 8, wherein the airflow groove (143) runs through the groove bottom wall along the preset direction.

10. The casing for oral cleaning according to claim 5, wherein the sealing groove (141) has a groove bottom wall and two groove sidewalls, and the two groove sidewalls are connected onto two sides of the groove bottom wall along the preset direction;
a flow guide groove (144) is provided on each of the two inner sidewalls, the flow guide groove (144) has an opening facing toward the sealing cavity (142), a passage allowing a gas to flow through is formed between the flow guide groove (144) and the sealing element (830), and the passage is communicated with the microchannel (180); and
the gas entering the sealing cavity (142) flows around the sealing element (830) for at least half circle through the passage and the microchannel (180), and then flows out of the sealing cavity (142).

11. The casing for oral cleaning according to claim 10, wherein the flow guide groove (144) runs through the groove sidewall along a direction perpendicular to the groove bottom wall.

12. The casing for oral cleaning according to any one of claims 5 to 11, wherein a circumferential length of the airflow groove (143) is shorter than a circumferential length of the sealing groove (141).

13. An oral cleaner comprising a pump mechanism (300), a cleaning accessory (2000) and the casing (100) for oral cleaning according to any one of claims 1 to 12, wherein the pump mechanism (300) is arranged in an inner cavity of the casing (100), the cleaning accessory (2000) has a cavity (2200) and an outlet (2300) communicated with each other, the cavity (2200) of the cleaning accessory (2000) is communicated with a liquid outlet end (320) of the pump mechanism (300), the pump mechanism (300) is configured to pump a liquid from the liquid storage cavity (120) into the cavity (2200) of the cleaning accessory (2000), and the liquid flows out of the outlet (2300).

14. The oral cleaner according to claim 13, wherein the cleaning accessory (2000) further comprises a brush.
